Europäisches Patentamt

European Patent Office

Office européen des brevets

(11) Publication number: **0 351 318**
A2

# EUROPEAN PATENT APPLICATION

(21) Application number: 89402014.8

(22) Date of filing: 13.07.89

(51) Int. Cl.5: **D 01 F 8/00**
D 01 D 5/08, D 04 H 1/42

(30) Priority: 15.07.88 US 220203

(43) Date of publication of application:
17.01.90 Bulletin 90/03

(84) Designated Contracting States:
AT BE CH DE ES FR GB GR IT LI LU NL SE

(71) Applicant: JAMES RIVER CORPORATION OF VIRGINIA
Tredegar Street P.O. Box 2218
Richmond, VA 23217 (US)

(72) Inventor: Allan,, John L.
c/o James River Corporation 1915 Marathon Avenue
Neenah, WI 54956 (US)

Boettcher, Jeffrey J.
c/o James River Corporation 1915 Marathon Avenue
Neenah, WI 54956 (US)

Katz, Leon
c/o James River Corporation 800 Connecticut Avenue
Norwalk, CT 06856 (US)

(74) Representative: David, Daniel
KAYSERSBERG 54, avenue Hoche
F-75008 Paris (FR)

(54) Meltblown polymeric dispersions.

(57) This invention relates to the preparation and use of very thin multiconstituent synthetic fibers. In accordance with the present invention, such fibers are produced from dispersions of incompatible polymers by meltblowing said polymeric dispersions. These procedures permit the preparation of very thin and highly attenuated polymeric fibers that contain microfibrils formed of different polymers. The practice of the present invention permits the preparation of nonwoven fabric webs having "customized" properties that make them suitable in a wide variety of applications. Also, microfibrils - which can themselves be used for various purposes - can be isolated from the multicomponent fibers of the present invention.

EP 0 351 318 A2

## Description

## MELTBLOWN POLYMERIC DISPERSIONS

### FIELD OF THE INVENTION

This invention relates to the preparation and use of very thin multiconstituent synthetic fibers. In accordance with the present invention, such fibers are produced from dispersions of incompatible polymers by meltblowing said polymeric dispersions. These procedures permit the preparation of very thin and highly attenuated polymeric fibers that contain microfibrils formed of different polymers. The practice of the present invention permits the preparation of nonwoven fabric webs having "customized" properties that make them suitable in a wide variety of applications. Also, microfibrils - which can themselves be used for various purposes - can be isolated from the multicomponent fibers of the present invention.

### DESCRIPTION OF THE RELATED ART

Synthetic fibers comprising two or more different polymers are well known. In addition to the standard "core-in-sheath" and "side-by-side" configurations, there are many other known configurations, including the "islands-in-the-sea" configurations, as disclosed by Okamoto and coworkers in U.S. Patents Nos. 4,350,006 and 4,381,335, and the "archipelagic" and "nebular" configurations as disclosed by Matsui and coworkers in U.S. Patents Nos. 3,672,802 and 3,968,307. In all of these disclosures, as in the present invention, a large number of fibrils of the "core" polymer are encapsulated by the "sheath" polymer. In the patents cited, however, the multicore structure is obtained by spinning the polymeric components together. U.S. Patent No. 4,350,006 (column 1, line 56 - column 2, line 3) and U.S. Patent No. 3,672,802 (column 4, lines 4-28), in fact, discuss some of the problems associated with the manufacture of fibers from polymer blends.

U.S. Patent No. 4,391,872 to Suzuki et al discloses the preparation of hollow filaments by a procedure that includes spinning a blend of a polyester component and a "cave-forming" agent (which may be a copolyester of a glycol with an aromatic dicarboxylic acid and an organic sulfonic acid) through a hollow filament spinning device or, alternatively, through a core-in-sheat filament spinning device.

In all of the cases cited above, the characteristic microstruture of the fibers produced results primarily from features of the complex spinning equipment used.

U.S. Patent No. 4,632,861 to Vassilatos discloses fibers made by spin-stretching blends of low density polyethylene and crystalline polypropylene. In the fibers, the polyethylene forms a continuous phase in which the polypropylene is dispersed as a second phase. Vassilatos further discloses that continuous blend filaments may be combined with matrix filaments, mixed in jet diffusers, and deposited on a moving collection belt to form nonwoven fabric webs.

U.S. Patent No. 3,382,305 to Breen, and U.S. Patent No. 3,369,057 to Twilley, are concerned with making oriented polyester microfibrils by dispersing the polyester in nylon polyamide (or in polyethylene), extruding, or "spinning", the dispersion into fibers, and then cold drawing the fibers from two to ten times their original length, for instance between rolls driven at different speeds. While it is suggested by Breen that attenuations of even more than ten times may be desirable, the nature of cold drawing is such that the fibers could not be stretched a great deal more without breaking. Breen distinguishes his procedure over meltblowing, column 1, lines 24-33.

All of the patents discussed above teach polymeric systems that are designed to produce essentially continuous cold drawn filaments. Applicants are unaware of any prior art that suggest the preparation of very fine highly attenuated multiconstituent fibers of the sort that can be produced by meltblowing dispersions of incompatible polymers.

### Summary of the invention

The fibers basic to this invention are those formed by meltblowing polymeric dispersions comprising a continuous phase of a thermoplastic resin in which has been dispersed discrete globules of a different and incompatible thermoplastic resin. Meltblowing imparts a degree of attenuation to the multicomponent fibers so produced which is an order of magnitude greater - at least 100 as compared to less than 10 - than that which is generally attainable by previously known procedures. The present invention enables the manufacture of usefully attenuated fibers without the necessity for cold drawing that characterizes prior art processes.

Another feature of this invention relates to the production of ultrafine thermoplastic resin microfibrils, which may be obtained from the basic fibers of this invention.

Still another feature of the present invention are nonwoven fabric webs made from the basic fibers of the invention.

Some of the ways the webs or derived compositions or derived fibers and microfibrils may be used can be summarized as follows : They may be used as wipes, napkins, and personal care items. They may be used as absorbents for water, urine, and similar fluids. They may be used as compositions for the release of bactericides, drugs, fungicides, and insecticides. They may be used as filters for the removal of particulate matter, water, oil, and so on, or as filters for removing acidic of basic materials. They may be used as ion exchange resins or for odor removal. They may be used as battery separators and in making barrier composites. They may be used in making nonwoven fabric laminates, for example by hydroentanglement. They may be used as reinforcing agents for plastics, adhesives, concrete, and the like, and in geotextile applications, either in the form of webs or as separated fibers. They can be conductive or may be made conductive by the inclusion of conductive or may be made conductive by the inclusion of conductive materials or by metal plating, and may then be used in EMI shielding or microwave-interactive heating constructions. In short, they may be used for just about anything that conventional fibrous webs can be used for as well as for many other applications based upon the increased strength and specific chemical properties derivable from their multicomponent structure.

## DESCRIPTION OF THE PREFERRED EMBODIMENTS

The basic fibers of this invention are formed by meltblowing polymeric dispersions. Said polymeric dispersions are comprised of a continuous phase and at least one dispersed phase, each of which phases is constituted by a different incompatible thermoplastic resin. For the purposes of this invention, resins are incompatible if their blends with one another constitute dispersions rather that solutions or alloys.

Blends according to the present invention will contain at least two polymers, copolymers, or terpolymers derived from the following monomers : olefins, acrylic acids and esters, acrylamide and derivatives, vinyl acetate, halogenated olefins, sulfonated olefins, maleic acid and its anhydride and esters, fumaric acid and its esters, vinylpyridine, vinyl pyrollidone, vinylsilanes, and the like. Alternatively, the blends may contain polymers, copolymers, or terpolymers of the following generic types : polyesters, polyamides, polyimides, polyethers, polyurethanes, polyamines, polysulfides, polyketones, polycarbonates, polysulfones, polysiloxanes, and the like. Particularly useful are the so-called liquid crystal polymers. In another variant, acid or base salts of the polymers, copolymers, or terpolymers may be used, or one or more components can be a metal or a metal alloy.

The continuous phase thermoplastic resin will, for example, be a copolymer, with an olefin, of acrylic acid, methacrylic acid, maleic acid, fumaric acid, itaconic acid, styrenesulfonic acid, 2-acrylamide-2-propanesulfonic acid, 2-sulfoethyl methacylate, or the like, or a drivative such as an anhydride, an ester, an amide, or a salt thereof. Polyamides such as nylon are also particularly useful.

The dispersed phase thermoplastic resin will generally be discontinuous. That is, it will probably not be longer that 10 feet and in fact will generally be only a few inches in length. The dispersed phase resin is often advantageously a polyolefin.

The multicomponent fibers of the present invention are highly attenuated. By "highly attenuated", we mean that they are generally at least 100 times - and in many cases much more than that, for example 500 times or even 1000 times or more - longer than they were as they left the orifices of the spinnerette. That is, a given volume of resin blend is longer after attenuation. This degree of attenuation is obtainable because the fibers according to the present invention are "drawn" pneumatically while still in the molten state rather than being drawn mechanically after they have solidified as in conventional processing. This being the case, the present fibers are "nonoriented" by comparison to cold drawn fibers.

There will be, of course, a certain amount of inherent orientation due to the pneumatic drawing and to the nature of the polymers themselves. Liquid crystal polymers will tend to be quite oriented.

The relationship between the degree of attenuation or draw ratio (A), the melt blown fiber diameter (D), and the diameter of the spinnerette hole (S) is given by $1 = (S/D)^2$. Strictly speaking, S should be corrected for swell of the resin as it leaves the die, and for shrinkage on cooling or crystallization, but this can be ignored for present purposes. For a typical spinnerette with 15 mil (381 micrometer) diameter holes, one obtains :

| Meltblown Fiber Diameter (D) | Attenuation (A) |
|---|---|
| 20 | 360 |
| 10 | 1,450 |
| 5 | 5,800 |
| 1 | 145,000 |

wherein fiber diameter is in micrometers and attenuation is a unitless ratio.

Making and using fibrous webs

In this invention the polymers that are melt dispersed and blown do not molecularly mix one with the other in the molten state -in other words, they are "incompatible" under the conditions used. It is possible to use sufficient heat and time to blend the polymers and produce a homogeneous composite, but such a result is not desired in this invention and is avoided by adjusting such factors as time, temperature, and choice of materials. For example, the melting temperatures and the viscosities of the molten polymers should not be too far apart. Furthermore, the polymers should not react or degrade substantially at temperatures above the melting point during their short time of contact in the molten state. Generally, it is sufficient to mix them in the dry state.

The dispersing of the polymers can be done in conventional manners, for instance, by mixing dry powders of flakes of the polymers and melting this mixture or, as indicated above, by melting the polymers separately and mixing them in the molten state. Fine dispersion of the polymers in the matrix material can be promoted by the use of thermally stable surfactants or dispersing agents, and by rapidly stirring, shaking, or other means and is further promoted by filtering the melt before extruding through sand filters, in-line intensive mixers, or similar devices. By one or more of these means dispersions approaching colloidal dimensions can easily be obtained. In general, the time of contact of the two polymers in the molten dispersed form is only a few seconds to a few minutes. The contact time can be kept short if necessary by special means in the spinning device. The molten polymers may be fed separately to a mixing chamber which has a relatively small dimension compared with the volume of output per minute of the spinning unit. Dispersion of the polymers in the mixing chamber may be promoted by the application of mechanical agitation or by the action of ultrasonic waves.

In general, the more polar or the most polar component in a blend forms the continuous phase, although other factors can be important. As the amount of the component which forms the continuous phase at, for instance, 40 percent by volume or thereabouts is decreased, a phase inversion can occur. The level at which this inversion begins or occurs depends upon many factors, but especially upon the size distribution of the component or components which form the disperse or discontinuous phase of phases. Scanning electron micrographs, infra-red spectrograms, and dye-staining tests on the webs from meltblown blends, on the microfibrils isolated therefrom, and on the continuous phases dissolved in the process of isolating the microfibrils show that phase inversion begins when the concentration of the component which initially formed the continuous phase is reduced below about 25 - 35 percent by volume, and is more-or-less complete when its concentration is less than about 5 -15 percent by volume, depending on the particular blend and the degree of mixing and dispersion.

The minimum amount for components forming the more-or-less continuous phase is generally about 10-15% by volume. We have found that microfibrils are formed from all of the different resins examined, and in almost every blend ratio down to concentrations as low as 1%. "The maximum amount will usually be about 90% although it could be as high as 99%. If microfibrils forming the dispersed phase are to be isolated, the material forming the continuous phase will be kept to a minimum. If microfibrils are to be used as reinforcement, their amount, constituting the discontinuous dispersed phase, will be minimal consistent with the desired reinforcing effect.

The numbers of microfibrils formed and their diameters depend upon many factors, including the mutual solubilities of the resins, their melt viscosities and surface tensions, and the intensity of mixing or dispersion. The average length of the encapsulated microfibrils depends upon the degree of attenuation of, and the distance between breaks in, the sheath fibers, as well as the diameters of the dispersed resin droplets.

Other ingredients can be included in the blend. For example, surfactants or dispersing agents can be added to improve the distribution of one or more of the components of the discontinuous phase, and to control the particle size and the particle size distribution of the discontinuous phase within the melt prior to, and after, extrusion through the spinnerettes. Surfactants may also be included to impart water wettability. Fluorinated compounds can be included to impart water repellancy or oil repellancy. Still other components which can be included in the blend include dyestuffs and pigments, antioxidants, whitening agents, and indicators.

Meltblown webs of multicomponent thermoplastic polymeric microfibers can be prepared by known techniques such as those set forth in an article entitled "Superfine Thermoplastic Fibers" appearing in: INDUSTRIAL & ENGINEERING CHEMISTRY, Vol. 48, No. 8 pp. 1342-1346 which describes work done at the Naval Research Laboratory Report 111437, dated Apr. 15, 1954, and in U.S. Patents Nos. 3,715,251, 3,704,198, 3,676,242, and 3,595,245. Basically, the method of formation involves extruding a molten polymeric material into fine streams and attenuating the streams to very fine fibers by flows of high velocity heated air that also breaks the streams into discontinuous fibers. Subsequent collection of the fibers on a screen, belt, drum, or the like yields a mat of the microfibers. The mat possesses some integrity due to entanglement of the individual fibers in the mat. There may also be some degree of thermal or self-bonding between the fibers, particularly when collection is effected only a short distance after extrusion. In general, the microfibers contained in such mats have an average fiber diameter of up to about only 10 microns with very few of the fibers exceeding 10 microns in diameter. Usually, the average diameter of the fibers in such mats is about 2-6 microns. While the fibers in the mat are predominantly discontinuous, they generally have a length exceeding that normally associated with staple fibers.

The novel multicomponent fibers of the present invention can be used as produced, or they can be used after further chemical reactions, mechanical processing, or incorporation into composite structures.

Meltblown webs according to the present invention can be point-bonded for added mechanical strength or they can be laminated with other webs to obtain structures with multiple functions.

In another embodiment of this invention, the formed webs may be further transformed chemically. For example, acrylic acid copolymers may be reacted with organic or inorganic bases to form salts or maleic anhydride copolymers may be reacted with amines to form amides or imides or salts thereof.

In yet another embodiment, the microfibrils may be removed to yield hollow fibers. The hollow fibers so produced may be used in exchange or diffusion-separation membranes.

MICROFIBRILS AND THEIR USE

In a major contribution of the present invention, one or more of the components may be removed to obtain microfibrils. The microfibrils may then be converted into microporous filters or they may be used in the reinforcement of thermoplastic or thermoset compositions. The microfibrils are isolated from the composite fibers by leaching out the continuous phase with a solvent. The solvent to be used will, of course, depend upon the polymeric components of the fibers to be separated.

One solvent suitable for the present process is formic acid, which has proven especially effective when the continuous phase is formed by a polyamide such as nylon and the microfibrils are composed of polyester. Other solvents useful in the present invention which dissolve the polyamide material and which do not affect polyester microfibrils substantially are phenol or mixtures of phenol with water. The added water reduces the solvent power of the phenol. The amount of water may be so adjusted that under the prevailing conditions the polyamide is dissolved preferentially and the polyester is substantially unaffected. Similarly, mixtures of phenols or cresols with alcohol or tetrachloroethane can be used. The dissolving or leaching action of these solvents varies with the ratio of the polymers used in the melt blend. Lower polyester content in the composite fiber requires less leaching or dissolving action by a given solvent than do higher ratios of polyesters. This increases gradually, and when action is slow, it is preferable to impart some mechanical action like pressing or rubbing the composite fiber. The isolation of the microfibrils from the composite fibers may be carried out by submerging the fibers in the solvent. The dissolving action may be improved by shaking, stirring, circulating the solvent, or moving the fibers in the solvent. In the leaching step elevated temperatures may be used, but dissolution at room temperature is often sufficient. The leaching may, if necessary, also be conducted in closed systems under pressure. Leaching is effected at temperatures below, usually far below, the melting or softening point of the microfibrils and the boiling point of the solvent, so that no difficulties are involved. The length of the microfibrils can be limited by cutting the composite fiber into staple of corresponding length, for instance one millimeter or longer. This modification of the process has the advantage of promoting the leaching action of the solvent. This is of special importance when composite filaments of a relatively high denier are spun from melts wherein the content of the polymer forming the microfibrils is high. The resulting microfibrils are obtained in the form of a slurry or dispersion, or of a matted yarn or loose network of microfibrils, depending on the size and length of the fibers and the conditions of separation applied.

Assuming no lateral redistribution of resins, microfibrils are formed through the attenuation of nominally spherical, molten droplets of the dispersed resin within the resin which forms the sheath fiber. In an idealized case, if the diameter of the droplets is s, then for a degree of attenuation A, the length of the microfibril formed is given by $L = sA$. Thus, for a 10 micrometer diameter droplet and a typical degree of attenuation of 5,800, the length of the microfibril is 58 millimeters. Their average length will be determined to some extent by random breaks in the sheath fiber. The length of sheath fibers between breaks depends upon operating conditions but typically runs to about 250 millimeters.

It follows from the above description that by proper modification of polymer ratios, dispersing action, spinnerettete, attenuation while spinning, dimensions of the filter, and similar factors, highly attenuated microfibrils of any desired length-width ratio and of any desired dimension can be made according to the process of the present invention. Microfibrils having diameters of a few microns to about a tenth of a micron, or even as low as a hundredth of a micron or less, and having length-width ratios of more than about 100 are preferred. These include microfibrils being only a few microns long, the dimensions of which are so small that when dispersed in water or another non-solvent they show Brownian motion. Such highly attenuated microfibrils have not been produced by any other known technique. Also, microfibrils having lengths of one or more millimeters to several centimeters and even continuous lengths of microfibrils may be made according to the present invention. Which of these dimensions are preferred depends mostly on the intended use of the microfibrils.

The new oriented microfibrils may be used alone or together with conventional textile fibers for the production of various kinds of textile materials. They may be used in insulation of clothing, for instance, in form of a thin layer between ordinary textile fabrics. Other applications comprise such uses as in very fine filters, for instance, for filtering aerosols. Other very important uses comprise their application for acoustical insulation. The small dimensions and the extreme surface-volume ratio of the microfibrils make them especially suited for applications where high insulation effects are desired combined with a very low weight and high mechanical resistance. For this purpose, they may be applied with adhesives to construction surfaces so that the single filaments adhere substantially perpendicularly or also in smaller angles to the surface.

Alternatively they may be applied to construction surfaces in the form of resilient sheets or mats. Because of their extremely high surface to volume ratio these microfibrils have strong mutual attraction and may be formed into paper-like structures with little or no sizing. Partial removal of the continuous phase may result in strong paper-like structures in which the residual continuous phase serves to hold the microfibrils together.

TEST METHODS

Unless stated otherwise, the following test methods were used in the working Examples.

Basis Weight

Samples were cut using a razor blade and a metal template (50 x 200 millimeters) and the sample weighed to the nearest 0.001 gram. The specimens were dried and equilibrated to ambient conditions before weighing. The basis weight is reported, in grams per square meter (g/m$^2$), as the weight of the sample x 100.

Caliper

Web thickness was measured using an Ames gauge (Model 79-011; Ames Inc., Waltham, MA) with zero load.

## Gurley Permeability

Permeability was measured using a Gurley Permeometer (Model 4301; Teledyne Gurley, Troy, NY) for a two-inch-diameter disc of the web with an air pressure of 0.5 inch of water. Data are reported as the flow rate in cubic feet per minute (ft3/min) through one square foot of material.

## Gurley Porosity

Porosity was measured using a Gurley Densometer (Model 4110; Teledyne Gurley, Troy, NY) for a one-square-inch test area. The time for 100 ml of air to flow through the sample with a 20 ounce weight on the inner cylinder was measured.

## Pore Number

The pore number was measured as the minimum air pressure, in inches of water, necessary to force a bubble of air through a 0.75-inch-diameter disc of web supporting a column of isopropanol 1.375 inches high. The equipment used is similar to the simplified set-up described in ASTM F316-80.

The maximum pore size was calculated using the method of ASTM F316-80.

## Tensile Measurements

Tensile strength (maximum strength) and elongation at break were measured using an Instron tensile tester (Model 1101; Instron Corp., Canton, MA). Jaw spacings and speeds were as follows:

|  | Sample Width (in) | Jaw Size (in) | Spacing (in) | Speed (in/min) |
|---|---|---|---|---|
| Strip | 1.0 | 1.0 | 3.0 | 12 |
| Grab | 3.0 | 1.0 | 4.0 | 20 |

## Liquid Absorbing Capacity

An accurately weighed sample of web (about 3 inches square) was placed in a dish of the liquid to be tested (e.g., distilled water, saline solution, etc.) for one minute. The sample was then removed from the liquid and placed in a horizontal position on 0.25-inch-mesh hardware cloth to drain for 15 minutes. The drained sample was then weighed immediately, and the uptake and retention relative to the dry specimen was calculated.

## Scanning Electron Micrographs (SEMs)

Samples of webs or fibers were cooled by immersion in liquid nitrogen and then fractured along the desired plane using a razor blade. The exposed fracture was then sputter-coated (Hummer S; Anatech Ltd) with gold-palladium prior to examination in a scanning electron micrograph (Model 35-C; JEOL Inst.). Photographs were taken at magnifications up to and including 10,000.

## Dye Staining

Webs and fibers were dyed using a fiber- and polymer-selective mixed dye coded Heft No. 4 (Heft Inc., Charlotte, NC). Samples were immersed in a aqueous solution of the dye (3% w/w) at the boil. After 15 minutes, the samples were air dried on blotter stock and the colors were compared with standards supplied by Heft Inc. cr similarly dyed specimens of known composition.

Color densities were also measured using a Macbeth Color Eye, Series 1500/Plus (Macbeth Division, Kollmorgen Corp., Newburgh, NY).

## EXAMPLES

### Examples 1 - 8 (Blends of PP with H-EAA)

Polypropylene ("PP" - Profax PF-011 from Himont Corp.) was tumble-blended with an ethylene/acrylic acid copolymer ("H-EAA" - Primacor 5990 from Dow Chemical Co.) at 10, 20, 40, 60, and 80 percent by weight. The blends were then meltblown into continuous webs using a method similar to that disclosed in U.S. Patent No. 3,972,759. They had the properties shown in Table 1.

Photographs taken through the SEM of the webs from Examples 1-4 and Example 8 showed them to consist of fibers ranging in size from about 10 micrometers down to 1 micrometer which encapsulated a multitude of microfibrils extending throughout the length of the fibers with diameters ranging in size down to 0.1 micrometer and less. The number of microfibrils was greatest in fibers from Examples 2 and 3, and decreased with the amount of PP in fibers from Examples 4 and 8. Microfibrils in fibers from Example 2 were packed close together, with some breaking through the surface of the encapsulating fibers ; microfibrils in fibers from Example 8 were more separated. Dye staining tests showed that the ethylene/acrylic acid copolymer, which stains a light yellow color, formed the continuous phase ; that is, it was essentially at the surface of the fibers, and encapsulated the polypropylene microfibrils in webs from Examples 2 - 4 and Example 8. Photographs taken through the SEM of fibers in the web from Example 1 showed a small number of microfibrils within the fibers, and dye-staining tests indicated that polypropylene, which stains a light purple color, formed the

6

continuous phase; that is, it was essentially at the surface of the fibers and that the encapsulated microfibrils therefore consisted of the H-EAA copolymer. Portions of the webs from Examples 3, 4 and 8 were extracted in a mixture of boiling solvent (isopropanol/1,1,1-trichloroethane/toluene: 15/70/15% by volume) for 3 - 4 hours. According to the teachings of U.S. Patent 4,296,019, this solvent mixture is a good solvent for ethylene-acrylic acid copolymers. After cooling, the mixtures were filtered, washed in fresh lots of solvent mixture, refiltered, and dried overnight in a vacuum oven (6°C/30 in.Hg). A reflectance infrared spectra of the residual microfibrils confirmed that they consisted entirely of polypropylene. SEM examination showed the isolated polypropylene microfibrils, which could be seen in loose bundles or separated microfibrils, ranged in size down to 0.1 micrometer and less.

### Examples 9 and 10 (Use in Ion Exchange and Base Absorption)

The meltblown webs disclosed in Examples 1 - 8 are useful in the fabrication of absorbent articles having ion-exchanging or base-absorbing properties. For example, disposable diapers can be made using the disclosed webs as topsheets which, on exposure to body fluids, not only absorb those fluids but also release protons which lower the skin pH to within the acid range, thus preventing or minimizing diaper rash.

The high base-absorbing capacity of webs from Examples 4 and 8 was shown by taking pieces containing 5.6 millimoles of carboxyl groups and stirring them separately under a nitrogen blanket in aqueous potassium hydroxide (500 ml; 5.0 equivalents of base per mole of carboxyl group theoretically available). Aqueous aliquots (10.0 ml) were removed periodically and the unreacted base concentration was determined by titration with sulfuric acid (N/50) under nitrogen using phenolphthalein as indicator. In a similar manner, absorption of the base by a sample of commercially available cation exchange resin, Amberlite IRC-84 (Rohm and Haas Co.) was determined. The results showed that the rate of absorption of base by the meltblown webs, compared as the rate at which available carboxyl groups reacted, approached that of the commercial ion exchange resin. Furthermore, after about 18 hours, the webs were at least 91% reacted.

Another useful property of the webs is their ability to absorb odiforous bases, such as ammonia which can be present or can form within urine, or organic amines such as can be present in catamenial fluids. The effectiveness of the webs in absorbing various bases was demonstrated in a manner similar to that above. Pieces of the web from Example 3 (5.0 g., containing a theoretical 5.6 millimole of carboxylic acid groupings) were stirred under nitrogen in N/50 solutions of choline ($Me_3NCH_22CH_2OH^+$ $OH^-$), potassium hydroxide (KOH), sodium hydroxide (NaOH), trimethylamine ($Me_3N$), ammonia ($NH_3$), and lithium hydroxide (LiOH) in amounts sufficient to provide 1.8 equivalents of the base per equivalent of acid. The solutions also contained 0.05% (w/v) of Biosoft D-35X, a 35% (w/w) sodium dodecylbenzene sulfonate surfactant solution available from Stepan Company. Aqueous aliquots (10.0 ml) were withdrawn periodically and the unreacted base concentration was determined by titration with sulfuric acid (N/50) using phenolphthalein or, for nitrogenous bases, methyl red as indicator. Absorption of the bases was rapid.

The absorption of bases was affected in a complex way which depended upon the base, the composition of the web, and the surfactant used. Surfactants can be selected in any one case which will facilitate wet-out of the webs and will eliminate any apparent induction period. This can be important in absorbent webs for use in diapers or tampons, for example. Such surfactants can be applied to the webs as a spray, for example, or by other means.

### Examples 11 - 15 (Mechanical Properties)

An important property of meltblown fibers and derived webs is their mechanical integrity. For example, certain polymers and copolymers are difficult to process because their fibers and derived webs lack mechanical strength. This deficiency can be surmounted by blending one or more polymers, at least one of which will form reinforcing microfibrils, as in the present invention. Mechanical strength and integrity can also be important when the webs are used, for example, as a base absorbent in diapers and tampons. The reinforcing effect of the polypropylene microfibrils in this application is illustrated in the following Examples.

Samples of web from Examples 2, 3, 4, and 8, one inch wide in the cross machine direction, were converted to the potassium salts by soaking the samples in aqueous potassium hydroxide (2.0 equivalents per mole of carboxyl group in the web) containing a surfactant (Biosoft D-35X; Stepan Co.; 0.05% w/w in the aqueous potassium hydroxide) for three hours under nitrogen. A web which had been made by meltblowing unblended H-EAA by the method of Examples 1 - 8, and which is the subject of another invention, was likewise partially converted to the potassium salt for comparison. All of the treated webs were then passed through a laboratory padder to wring out excess of base solution, and then rinsed thoroughly with distilled water.

Machine-direction strip tensile strengths were then run immediately on the web samples. Values obtained are given in Table 2 and compared with the corresponding tensile strengths of untreated strips of the same webs. The data show that the polypropylene exerts a significant reinforcing effect, at least up to the level of 60% (w/w) H-EAA.

### Examples 16 and 17 (Use in Water Absorption)

The following examples demonstrate the effect of modifying the web from Example 4 by reaction or treatment with bases and surfactant.

Swatches of web from Example 4 were immersed in solutions of sodium hydroxide (5% w/w) (Example 16) and ammonia (10% w/w as $NH_3$) (Example 17) in water containing Igepal CA-630 (GAF Corp.; 2.0% w/w) for 16 hours in a closed container. The samples, which were highly swollen but retained their integrity, were washed with cold running water for 0.75 hours and then dried. Both swatches absorbed water like blotting paper. In contrast, a sample of untreated web from Example 4 would not wet out.

A nitrogen analysis (Badger Laboratories and Engineering Inc., Appleton, WI) showed the ammonia-treated swatch to contain 140 ppm of nitrogen, corresponding to 0.6% conversion of the acid groups to ammonium salt.

Examples 18 - 24 (Use in Water Absorption)

These examples illustrate the effects of treating webs from Examples 2, 3, and 4 with potassium hydroxide and surfactant.

Swatches of the webs were immersed in a solution of potassium hydroxide (5% w/w) in water containing Igepal CA-630 (0.5% w/w) for 16 hours in a closed container. The swatches were then passed through a wringer, washed in cold running water for 8 hours, and then air dried. Results of water uptake measurements on the treated webs compared with untreated webs and a web meltblown from unblended polypropylene (Profax PF-011) by the method of Examples 1 - 8 are summarized in Table 3. The apparent decrease in water uptake in Example 20 is attributable to the slight solubility of the web in water.

Examples 25 - 29 (Use in Water Absorption)

These examples further illustrate the effects of treating webs with various reactants and surfactants.

Swatches of web from Example 4 were soaked in the following aqueous solutions for 16 hours at ambient temperature:

| Example No. | | Components of Solution |
|---|---|---|
| | 25 | Choline Bicarbonate (5% w/w) Igepal CA-630 (2% w/w) |
| | 26 | Katapol PN-810 (5% w/w; A polyethoxylated, hydrogenated tallow amine available from GAF Corporation) |

The swatches were then washed for six hours with agitation under cold running water and then air dried. The results of water uptake tests are summarized in Table 4.

Nitrogen analyses (Badger Laboratories and Engineering, Appleton, WI) on the dried webs from Examples 25 and 26 gave the following results: Example 25, 3261 ppm N, equivalent to 13.9% neutralization of carboxyl groups in the web; Example 26, 29 ppm N, equivalent to 0.1% neutralization of carboxyl groups in the web.

A swatch of the web from Example 2 was soaked in the following aqueous solution for 16 hours at ambient temperature:

| Example No. | | Components of Solution |
|---|---|---|
| | 27 | Potassium hydroxide (0.3% w/w) Variquat K-1215 (Methyl bis-(polyethoxyethanol)dodecylammonium chloride available from Sherex Chemical Company; 5.0% w/w) |

The swatch was then washed for 8 hours in cold, running water and air dried after passing through a wringer. The results of water uptake measurements are in Table 4.

Swatches of web from Example 4 were soaked in the following aqueous solutions for 16 hours:

8

| Example No. | Components of Solution |
|---|---|
| 28 | Nalco N-7655 (An epichlorohydrin-modified diethylamine condensate from Nalco Chemical Co., Oak Brook, IL; 5.0% w/w) Igepal CA-630 (0.5% w/w) Sodium hydroxide solution (15% w/w) to give a pH of 10.2 |
| 29 | Dow Quat 188 (A 60% solution of 2-chloro-3-hydroxypropyl triméthylammonium chloride from Dow Chemical Co., Midland, MI; 3.9% w/w) Sodium hydroxide (0.66% w/w)Igepal CA-630 (0.5% w/w) |

The swatches were passed through a wringer, washed with cold, running water for six hours and then air dried. The results of water uptake measurements are in Table 4.

Examples 30 and 31 (Use in Water Absorption)
In the following examples, web from Example 4 was used as a support or anchor for other, highly water-absorbent materials.
A sample of web from Example 4 was soaked in the following solution for 16 hours.

| Example No. | Components of Solution |
|---|---|
| 30 | Zinc Oxide Solution No. 1 (A solution of zinc ammonium carbonate from S. C. Johnson & Son Inc., Racine, WI). Ammonia solution to preserve a clear solution. |

The treated web was passed through a wringer, washed with cold running water for five hours and then dried in an oven at 100°C for 0.5 hours. The dried web readily absorbed water.
Another sample of the web from Example 4 was soaked for 16 hours in the following solution.

| Example No. | Components of Solution |
|---|---|
| 31 | Acrysol AV-S (A 20/ solution of polyacrylic acid; Rohm 8 Haas, Philadelphia, PA) |
| | Bacote 20 (A solution of ammonium zirconium carbonate from Magnesium Electron, Inc., Flemington, NJ; 19.3/w/w) |
| | Igepal CA-6320 (0.4% w/w) |
| | Sodium Hydroxide (2.2% w/w) |
| | Sodium Bicarbonate (0.8% w/w) |

The treated swatches were passed through a laboratory wringer (5 pli) and then dried in a forced air oven at 110°C for 30 min. The dried swatches took up water readily with a strong wicking action and swelled to several times their original volume.

Example 32 (Use as Metal Absorbents)

This example illustrates the use of webs or derived fibers from Examples 1 - 8 as absorbents for metal ions.

A quantity of the web from Example 8 was chopped in a high-speed Waring blender containing distilled water, and the slurry was packed into a chromatographic tube. A distinct blue band was formed at the top of the column as 10 bed volumes of copper (II) chloride solution (0.3 micrograms Cu/ml at pH:7.2) was passed down the tube. The copper content of the resultant effluent was below detection limits (0.02 micrograms/ml by anodic stripping voltammetry; Brinkmann, Metrohm Polarograph). The exchanged copper ion was elutable with 0.1-1.0 N hydrochloric acid, and the bed could be reused for metal extraction.

Examples 33-44 (Use as Adhesives)

The following examples illustrate the use of webs from Examples 2 and 3 as adhesives. In these tests, one layer of the meltblown web was thermally bonded to a spunbonded polypropylene web available under the trademark Celestra (R) from James River Corporation, Richmond, VA. It will be clear from the results to those skilled in the art that these meltblown webs, which contain polypropylene microfibrils encapsulated within ethylene/acrylic acid copolymer (H-EAA) fibers, could equally well be used in a sandwich construction to bond two Celestra webs together, or they could be used in a similar fashion to bond together any two components to which the H-EAA copolymer will bond and which normally have a higher glass transition temperature or melting point than the adhesive web.

A swatch of the web from Example 3 was passed in intimate contact with a swatch of Celestra spunbonded polypropylene through a laboratory calender (Special Model 700, Serial No. 8934, Beloit-Wheeler Inc., Kalamazoo, MI) under the following conditions.

| Example 33 | Conditions | |
|---|---|---|
| | Web widths | 2in |
| | ROll Temp. | 200°F |
| | Speed | 15 ft/min |
| | Loading | 123 lb/linear inch |

A strong bond which could not be pulled apart was formed between the Celestra web and the web from Example 3. The laminate was flexible and showed no bleed-through of the copolymer. When the test was repeated using a meltblown web made from polypropylene only, no bonding occurred.

The tests were repeated using various 2 inch wide swatches of web from Examples 1 - 3 under the conditions and with the results indicated in Table 5. As can be seen, porosities were relatively high (low Gurley porosity times in seconds) even when a very strong bond was formed, showing that little spread or bleeding of the adhesive H-EAA copolymer occurred. This illustrates several particular advantages in the use of adhesive webs made from blends by the process of this invention. For example, it is possible to apply in a controlled fashion very small amounts of adhesive materials without the use of solvents or expensive application equipment such as extruders; and polymers which form the core microfibrils, such as polypropylene, can be of low cost relative to the adhesive resin, which can be a polyurethane, a polyester, or copolymers of vinyl acetate, vinyl alcohol, or methyl acrylate and the like.

The effectiveness of the webs containing relatively small amounts of H-EAA (eg., 10%) was unexpected because it is believed that, at low concentrations, the H-EAA is present mostly as microfibrils in what can be termed the discontinuous phase, encapsulated within polypropylene fibers. Evidently, sufficient of these H-EAA microfibrils are exposed at the fiber surfaccs to be effective as an adhesive, and the effectiveness may be further enhanced by more of the adhesive copolymer being forced or channeled to the surface under the influence of heat and pressure.

Examples 45 - 48 (Blends of PP with High MW H-EAA)

The following tumble blends of polypropylene (Profax PF-011: Himont) and ethylene/acrylic acid copolymer (Primacor 5981 a higher molecular weight version of Primacor 5990; Dow Chemical Company, Midland, MI) were meltblown following the procedures of Examples 1 - 8.

| Example No. | Primacor 5981 In Blend (% w/w) |
|---|---|
| 45 | 1.0 |
| 46 | 3.0 |
| 47 | 10.0 |
| 48 | 60.0 |
| 49 | 80.0 |

Physical properties of the derived webs are given in Table 6.

Photographs taken through the SEM of fibers in the webs of Examples 45 - 48 showed in every case the presence of microfibrils encapsulated within fibers. Dye stain tests indicate that the microfibrils in Examples 48 and 49 were polypropylene, whereas those in Examples 45 - 47 were mostly of the H-EAA copolymer. There were many PP microfibrils within fibers from Examples 48 and 49, and they were of smaller diameters than the microfibrils in Examples 1 - 8. There were only a few microfibrils in fibers from Examples 45 - 47.

The webs of Examples 45 - 49 are especially useful as adhesives. They may also be electrically charged, after which they are particularly useful as filters in face masks and the like.

Examples 50 - 57 (Blends of PP with Salts)

These examples illustrate the meltblowing of blends of polypropylene (PP), ethylene/acrylic acid copolymer (H-EAA), and pre-formed sodium (Na-EAA) and calcium (Ca-EAA) salts of copolymers of acrylic acid and ethylene. The blends were meltblown as in Examples 1 - 8. The compositions and some properties of the derived webs are summarized in Table 7.

The webs from Examples 50 - 54 wet out readily with water, and absorbed significant amounts of water. The webs from Examples 53 and 54 also became highly swollen and rapidly formed a gelatinous mass, and they are suitable for making absorbent products such as diapers.

Webs containing the calcium salts (Ca-EAA) show considerably reduced solubility in water and therefore are useful in water-conditioning applications and as filtration aids. A relatively small amount of AClyn 0084 will render a blended ethylene/acrylic acid copolymer effectively insoluble by interchange of calcium ion in the melt at elevated temperatures during the meltblowing process. This is illustrated by the experimental data summarized in Table 8.

Scanning Electron Micrographs of fibers in the webs from Examples 53 and 54 showed that the encapsulated polypropylene microfibrils were extremely fine, many of them being less than 100 nanometers in diameter.

Example 58 (Microfibrils)

This example illustrates the isolation of polypropylene microfibrils from the web of Example 51 and their conversion to a filter paper.

Web (930 g) from Example 51 was cut into one inch squares which were suspended in distilled water (3720 g) containing sodium hydroxide (31 g). The suspension was then stirred and heated under reflux for five hours, after which it was cooled and the suspended microfibrils were filtered off through a Reeve Angel No. 202 (33 cm) filter paper (Whatman Inc., Clifton, NJ) using a Buchner funnel under vacuum. After a slight water rinse, the insoluble microfibrils were re-suspended in a fresh lot of sodium hydroxide solution and heated and stirred for a further five hours under reflux, and then filtered off and rinsed as before. The microfibrils were then suspended in 5000 ml. of distilled water and heated under reflux for five hours and then, after cooling, they were filtered off and dried at 60°C under vacuum (5 mm Hg) overnight. The dried fibers weighed 350 g (94% of theory). A Fourier Transform Infrared (FTIR) spectrogram on the fibers showed that they consisted entirely of polypropylene without a trace of acrylate functionality present.

The microfibrils were then converted to filter papers in ways typified by the following. Polypropylene microfibrils (2.5g.) were suspended in distilled water (1000 ml) containing Igepal CA-630 (0.1% w/v; GAF Corp., Wayne, NJ) and then dispersed for 20 minutes in a high speed (3000 RPM) disintegrator (Per TAPPI Standard T205 05-71: Essex International, Inc., Lancaster, OH). The dispersion was then set aside for a period to allow entrapped air bubbles to escape, and then was converted to a handsheet with a standard former (Per TAPPI Standard T205 05-71: Essex International, Inc., Lancaster, OH). After air drying, the hand sheets were further bonded by calendering four inch squares through a hot nip (320°F: 30 ft/min.; 100 lbs/linear inch). A typical sheet then had a tensile strength of 122 lb/in² (1 inch strip; 0.1875 in. jaw span; 1 inch/min), a Pore Number of 19.4 inches water, and a Gurley Porosity of 28.1 sec.

Examples 59 - 64 (Blends of PP with Polyester)

Blends of polypropylene (Profax PF-011: Himont Inc.) and a poly (butylene terephthalate) polyester resin were meltblown following the procedures of Examples 1 - 8. The unblended resins were meltblown for comparative purposes. Compositions and some properties are summarized in Table 9.

Scanning Electron Micrographs of fibers from Examples 60 - 63 showed microfibrils encased within the fibers. Dye stain tests, which stained the polyester a dark violet, showed that the polyester formed the sheath fiber.

Webs from the blended resins are useful as a base for filter media as demonstrated by Bacterial Filtration Efficiency (BFE) data for Examples 61 and 62 in Table 9.

The filtration efficiencies can be improved further by imparting an electric charge to the fibers in the webs using a corona unit. Thus, the web from Example 62 was passed at 10 meters per minute between a corona bar (Model No. AB-5000-504, Pillar Corp., West Allis, WI) set to 1.5 kV and a grounded backing roll at a distance of 0.125 inches. Two days later the treated web was exposed to 90 - 100% relative humidity at 95°C in a forced air oven, and then stored under ambient conditions for a total of twenty days. After this time, the BFE of the corona-treated web was 96.3% that of the untreated web after twenty days was 89.0% (by Nelson Laboratories, Inc., Salt Lake City, UT).

The webs from blends could readily be molded into shapes such as would be useful as face masks. Thus, when the web from example 62 was pressed in a hemispherical steel mold with clearances of 11 - 15 mils for 0.7 sec at 200°F, a shaped porous filter was formed.

Examples 65 - 81 (Blends of PP with Adhesive and Elastomeric Resins)

Blends of polypropylene (Profax PF-011; Himont Inc.) were made with a variety of other resins having the compositions shown in Table 10. Each blend was meltblown following the procedures of Examples 1 - 8. Physical properties of the products are summarized in Table 11.

Scanning Electron Micrographs showed encapsulated microfibrils for blends of each type.

There were very few microfibrils in fibers of Examples 65 and 66, the two olefin-based resins being practically soluble in each other at these blend ratios. Microfibrils were clearly visible in fibers from Examples 67 and 68.

Microfibrils were observed in fibers from Examples 69 - 72. Dye stain tests, which colored the methyl acrylate a bright yellow, showed that the polar copolymers formed the outer, encapsulating fiber.

Microfibrils were apparent in fibers from Examples 73 - 77. Again, dye tests showed that the more polar ethylene vinyl acetate copolymer, which stained a bright orange, was on the outside of the fibers at the higher copolymer levels.

The SEMs showed that microfibrils were present in all fibers from Examples 78 - 81. Dye staining, which colored the vinyl alcohol copolymer pink, showed the Soarnol GL-K to be on the outside of the fibers, even at the lowest concentrations. The SEMs also showed that there were even some very fine microfibrils within microfibrils.

All of the blends functioned well as heat-activated adhesives. A particular advantage of such blends is that the more costly adhesive copolymer is diluted by the less costly polypropylene but remains mainly at the surface of the fibers where it is available for bonding. Even at the lower levels, the adhesive copolymer is sufficiently accessible to be effective.

Another completely unexpected property of many of the derived webs was a high degree of elasticity as evidenced by the high elongation at break in the strip tensile measurements for Examples 68, 72, and 77. Evidently, the elasticity of the copolymers is retained in spite of the core of reinforcing polypropylene microfibrils. The same effect can be achieved with other, costly thermoplastic elastomers, such as the Estane polyurethanes from B. F. Goodrich, and the Hytrel polyesters from duPont.

Examples 82 and 83 (Hydroentanglement)

The webs from Examples 72 and 77 were stretched in the machine and cross-machine directions on a supporting wire screen and polyester staple fibers wcre hydroentangled thereinto using high pressure water jets. After drying, a soft velvet-like composite was obtained.

Similar composites can be made with many other staple fibers, including cellulosic fibers.

Example 84 (Metals)

A blend of tin powder (a mixture of MD-201 and MD-301 grades from Alcan Ingot and Powders; average particle size 8 - 9 micrometers) and polypropylene (75% w/w; Profax PF-011; Himont, Inc.) was made up by tumbling the two components together and using mineral oil (0.45% w/w; Nujol Brand) as binder. The blend was meltblown following the procedures of Examples 1 - 8. A web was obtained, containing tin microfibrils encapsulated within the polypropylene, which is conductive and is useful for EMI shielding and for microwave cooking applications. Similar composites can be made using other low melting metals and alloys in combination with suitable polymers and copolymers.

Example 85 (Liquid Crystals)

A blend of Vectra B-900 liquid crystal polymer (a polyester-polyamide copolymer from Hoechst-Celanese Inc.) and a polybutylene terephthalate resin (60% w/w) was meltblown following the general procedures of Examples 1 - 8. Strong, crystalline microfibrils of Vectra B-900 were obtained.

Examples 86-90 (Blends of PP with Nylon Copolymer)

Polypropylene ("PP"--Profax PF-011 from Himont Corp.) was tumble blended with a copolymer of nylon-6 and an amine-terminated polyethylene oxide (Hydrofil, available from Allied Fibers, Inc., Petersburg, VA) and the blend was meltblown as in Examples 1 - 8. The compositions and some of the physical properties of the derived webs are given in Table 12.

The webs became increasingly more water absorptive as the level of Hydrofil was increased. The web from Example 90 absorbed instantaneously a drop of cold water placed on its surface.

From the above description and specific Examples of the invention, many variations in the webs, microfibrils, composites, useful products, and processes of this invention will be apparent to those skilled in the relevant arts. Such variations are within the scope of the present invention as measured by the appended claims.

TABLE 1

| Example No. | H-EAA (%) | Calc. Capacity (meq.$CO_2H$/g) | Basis wt. ($g/m^2$) | Caliper (mil) | Permeability ($ft^3$/min) | Pore No. (in.water) | Strip Tensile ($lb/in^2$) | |
|---|---|---|---|---|---|---|---|---|
| | | | | | | | MD | CM |
| 1 | 10 | 0.3 | 131 | 80 | 70 | 8.2 | 23 | 27 |
| 2 | 20 | 0.6 | 117 | 80 | 90 | 5.8 | 31 | 25 |
| 3 | 40 | 1.1 | 126 | 60 | 80 | 6.6 | 31 | 21 |
| 4 | 60 | 1.7 | 119 | 45 | 61 | 5.8 | 25 | 28 |
| 5 | 60 | 1.7 | 69 | 25 | 106 | 5.8 | 32 | 26 |
| 6 | 60 | 1.7 | 155 | 61 | 50 | 5.9 | 49 | 57 |
| 7 | 80 | 2.2 | 121 | 30 | 203 | 4.4 | 25 | 16 |
| 8 | 80 | 2.2 | 230 | 52 | 71 | 4.3 | 85 | 48 |

TABLE 2

| Example No. | Caliper Dry Web (mil) | H-EAA in Blend (% w/w) | Tensile Strengths (lb/in²:MD) | | Ratio A/B |
| --- | --- | --- | --- | --- | --- |
| | | | Water-wet K Salts (A) | Untreated Dry Webs (B) | |
| 11 | 80 | 20 | 39 | 31 | 1.26 |
| 12 | 60 | 40 | 29 | 31 | 0.94 |
| 13 | 45 | 60 | 20 | 25 | 0.80 |
| 14 | 52 | 80 | 14 | 49 | 0.29 |
| 15* | 37 | 100 | 9 | 43 | 0.21 |

Note : Tensile strengths of K salts based on caliper of original dry web.

* Comparative Example (not a blend).

TABLE 3

| Example No. | H-EAA in Blend (%) | Potassium Salt Formed | Water Uptake (g/g) after | |
|---|---|---|---|---|
| | | | (1 - 10 min) | (16 hours) |
| 18 | 20 yes | | 5.8 | 8.3 |
| 19 | 40 yes | | 4.8 | 8.0 |
| 20 | 60 yes | | 6.3 | 5.4 |
| 21 | 20 no | | 0.8 | 1.3 |
| 22 | 40 no | | 1.0 | 2.3 |
| 23 | 60 no | | 0.8 | 1.9 |
| 24 * | 0 no | | 1.4 | 3.7 |

* Comparative Example (not a blend)

EP 0 351 318 A2

TABLE 4

| Web From Example | Water Uptake (g/g) after | |
|---|---|---|
| | 1 min | 16 hours |
| 25 | 2.0 | 10.0 |
| 26 | 9.3 | 12.4 |
| 27 | 9.0 | 8.0 |
| 28 | 6.4 | 7.9 |
| 29 | 8.0 | 10.5 |

TABLE 5

| Example No. | Web From Example No. | H-EAA in Blend (%) | Roll Temp. (°F) | Speed (fpm) | Load (pli) | Bond | Gurley Porosity (sec) |
|---|---|---|---|---|---|---|---|
| 34 | 3 | 40 | 209 | 15 | 45 | v. good | 3.6 |
| 35 | 3 | 40 | 250 | 20 | 112 | v. good | 5.6 |
| 36 | 2 | 20 | 250 | 20 | 123 | v. good | 6.8 |
| 37 | 2 | 20 | 250 | 50 | 470 | v. good | 12.8 |
| 38 | 2 | 20 | 250 | 50 | 503 | v. good | 33.7 |
| 39 | 1 | 10 | 250 | 50 | 291 | good | 19.8 |
| 40 | 1 | 10 | 250 | 50 | 224 | good | 6.3 |
| 41 | 1 | 10 | 250 | 50 | 335 | good | 20.8 |
| 42* | (Note A) | 0 | 250 | 20 | 56 | poor | 14.9 |
| 43* | (Note A) | 0 | 250 | 50 | 56 | poor | 0.9 |
| 44* | (Note A) | 0 | 200 | 15 | 56 | poor | - |

Note : (A) Using a meltblown web made from polypropylene only.

* Comparative Examples (not blends)

EP 0 351 318 A2

## TABLE 6

| Example No | Basis Weight (g/m²) | Web Caliper (mil) | Gurley Perm. (ft³/min) | Pore No. (in water) | Strip Tensile | | | |
| | | | | | Strength (1b/in²) | | Elong. (%) | |
| | | | | | MD | CD | MD | CD |
|---|---|---|---|---|---|---|---|---|
| 45 | 31 | 28 | 326 | 3.0 | 38 | 17 | 6 | 11 |
| 46 | 30 | 18 | 253 | 3.2 | 43 | 31 | 3 | 5 |
| 47 | 26 | 18 | >400 | 3.0 | 52 | 37 | 5 | 4 |
| 48 | 162 | 55 | 230 | 3.5 | 22 | 15 | 91 | 59 |
| 49 | 357 | 95 | 168 | 3.3 | 40 | 36 | 76 | 114 |

EP 0 351 318 A2

TABLE 7

| Example No. | Composition of Blend (NOTE) | | Basis Wt. (g/m²) | Caliper (mils) | Permeability (ft³/min) |
|---|---|---|---|---|---|
| | Component 2 | Component 3 | | | |
| 50 | AClyn 0083(40) | - | 231 | 47 | 109 |
| 51 | AClyn 0083(60) | - | 502 | 99 | 49 |
| 52 | AClyn 0083(80) | - | 472 | 82 | 35 |
| 53 | AClyn 126 (40) | - | 258 | 69 | 47 |
| 54 | AClyn 0084(60) | - | 95 | 31 | 110 |
| 55 | AClyn 0084(80) | - | 499 | 127 | 34 |
| 56 | AClyn 0084(10) | Primacor 5981(70) | 348 | 98 | 149 |
| 57 | AClyn 0084(10) | Primacor 5981(70) | 173 | 65 | 53 |

NOTE : Component 1 is Profax PF-011 polypropylene. Values in parenthesis are percentages by weight of Components 2 and 3 in the blend. The AClyn(r) resins are salts of 50% neutralized ethylene-acrylic acid copolymers available from Allied-Signal Inc., Morristown, NJ. AClyn 0083 and 0084 are respectively the sodium and calcium salts of a 20% acrylic acid copolymer, and AClyn 126 is the sodium salt of a 33% acrylic acid copolymer.

EP 0 351 318 A2

TABLE 8

Web (20.0g) from Example 56 was chopped into small pieces with water in a Waring Blender which were packed into a glass column 2.0 cm diameter and 40 cm tall. The volume of the bed of chopped web was 70 ml. Deionized water adjusted to pH 9.7 with dilute ammonium hydroxide was then percolated through the column under gravity at a rate of 5.8 ml/minute. Samples of the eluate (150 ml) were collected and analyzed with the following results :

| TOTAL Eluate Collected | Solubles (See note) | |
|---|---|---|
| (Bed Volumes) | Calcium) | H-EAA |
| 2.1 | 0.1 | 13 |
| 4.3 | 0.0 | 4 |
| 6.4 | 0.0 | 4 |
| 8.6 | 0.0 | 4 |
| 12.9 | 0.0 | 1 |
| 19.3 | 0.0 | 1 |
| 21.4 | 0.0 | 1 |
| 25.7 | 0.0 | 0 |

NOTE : Calcium levels in mg/l were determined by the method of ASTM D1126-80. The amounts of ethylene/acrylic acid copolymer (H-EAA), expressed as mg/l, were calculated from Total Oxidizable Carbon (TOC) levels determined by Donohue Analtyical, Sheboygan, WI.

EP 0 351 318 A2

TABLE 9

| Example No. | PP in Blend (%) | Basis Weight (g/m²) | Web Caliper (mil) | Gurley Perm. (ft³/min) | Pore No. (in water) | Grab Tensile Strength (lb/ply) | | BFE(A) |
|---|---|---|---|---|---|---|---|---|
| | | | | | | MD | CD | |
| 59* | 100 | 19 | 19 | 175 | 6.8 | 1.9 | 2.2 | 71 |
| 60 | 80 | 20 | 17 | 160 | 5.5 | 0.7 | 0.8 | |
| 61 | 60 | 42 | 25 | 66 | 8.5 | 2.4 | 2.6 | 89.1 |
| 62 | 40 | 43 | 26 | 74 | 8.5 | 1.0 | 1.9 | 95.3 |
| 63 | 20 | 33 | 20 | 104 | 6.0 | 0.7 | 1.4 | |
| 64 | 0 | 41 | 26 | 87 | 7.5 | 0.4 | 2.3 | |

NOTE : (A) Bacterial Filtration Efficiencies determined by Nelson Laboratories, Inc., Salt Lake City, UT. Measurements taken without heat and humidity treatment of the webs.

* Comparative Examples (not blends).

TABLE 10

| Example No. | | Blended Resin | | Supplier | Amount Blended with PP (% w/w) |
|---|---|---|---|---|---|
| | | Copolymer Type | Trade Name | | |
| | 65 | Ethylene/1-Butene | Duraflex DP-8910 | Shell Chemical | 1 |
| | 66 | | | | 3 |
| | 67 | | | | 10 |
| | 68 | | | | 60 |
| | 69 | Ethylene/Methyl Acrylate | Escorene XS-13.04 | Exxon | 1 |
| | 70 | | | | 3 |
| | 71 | | | | 3 |
| | 72 | | | | 60 |
| | 73 | Ethylene/Vinyl Acetate | Escorene LD-764.36 | Exxon | 1 |
| | 74 | | | | 3 |
| | 75 | | | | 3 |
| | 76 | | | | 10 |
| | 77 | | | | 60 |
| | 78 | Ethylene/Vinyl Alcohol | Soarnol GL-K | Nippon Gohsei | 5 |
| | 79 | | | | 10 |
| | 80 | | | | 20 |
| | 81 | | | | 40 |

EP 0 351 318 A2

TABLE 11

| Example No | Basis Weight (g/m²) | Web Caliper (mil) | Gurley Perm. (ft³/min) | Pore No. (in water) | Strip Tensile | | | |
| | | | | | Strength (1b/in²) | | Elong. (%) | |
| | | | | | MD | CD | MD | CD |
|---|---|---|---|---|---|---|---|---|
| 65 | 26 | 15 | 292 | 3.8 | 76 | 49 | 4.6 | 5.6 |
| 66 | 26 | 13 | 228 | 4.8 | 102 | 52 | 13.6 | 15.3 |
| 67 | 25 | 12 | 203 | 5.0 | 48 | 102 | 8.3 | 9.7 |
| 68 | 86 | 25 | 131 | 5.2 | 68 | 56 | 154 | 139 |
| 69 | 23 | 12 | 281 | 3.8 | 61 | 45 | 21 | 38 |
| 70 | 50 | 30 | 121 | 5.7 | 46 | 25 | 19 | 29 |
| 71 | 27 | 20 | 216 | 4.2 | 47 | 25 | 21 | 25 |
| 72 | 164 | 52 | 170 | 3.0 | 56 | 53 | 206 | 200 |
| 73 | 27 | 15 | 296 | 4.3 | 56 | 39 | 4.2 | 3.4 |
| 74 | 69 | 54 | >400 | 1.8 | 19 | 8 | 2.6 | 5.1 |
| 75 | - | 23 | >400 | 2.8 | 28 | 15 | 20 | 19 |
| 76 | 86 | 68 | >400 | 1.2 | 5 | 5 | 10 | 20 |
| 77 | 118 | 42 | 121 | 2.6 | 51 | 60 | 172 | 234 |
| 78 | 49 | 30 | 159 | 3.5 | 11 | 6 | 43 | 134 |
| 79 | 100 | 53 | 45 | 9.2 | 23 | 11 | 5 | 8 |
| 80 | 110 | 41 | 84 | 6.4 | 36 | 12 | 11 | 14 |
| 81 | 99 | 45 | 63 | 6.6 | 25 | 9 | 11 | 9 |

EP 0 351 318 A2

EP 0 351 318 A2

TABLE 12

| Example No | Hydrofil (% w/w) | Basis Weight $(g/m^2)$ | Web Caliper (mil) | Gurley Perm. $(ft^3/min)$ | Pore No. (in water) | Strip Tensile | | | |
|---|---|---|---|---|---|---|---|---|---|
| | | | | | | Strength $(lb/in^2)$ | | Elong. (%) | |
| | | | | | | MD | CD | MD | CD |
| 86 | 10 | 55 | 38 | 95 | 7.0 | 32 | 34 | 17 | 22 |
| 87 | 20 | 57 | 36 | 90 | 6.0 | 29 | 32 | 20 | 28 |
| 88 | 40 | 58 | 27 | 108 | 6.0 | 27 | 26 | 19 | 23 |
| 89 | 60 | 430 | 90 | 24 | 7.5 | 38 | 24 | 11 | 8 |
| 90 | 80 | 88 | 38 | 75 | 6.0 | 34 | 37 | 35 | 39 |

Samples of webs conditioned for 24 hr. at 72°F and 50 % relative humidity before testing.

**Claims**

1. A fiber formed by meltblowing a polymeric dispersion that comprises at least two phases in which a first phase is a thermoplastic resin consisting essentially of a polymer, copolymer, or terpolymer and at least one second phase comprises a second incompatible polymer, copolymer, or terpolymer or a metal.

2. A fiber according to claim 1 wherein said polymers, copolymers, or terpolymers are selected from the groups consisting of (a) polymers, copolymers, or terpolymers formed from olefins, halogenated-olefins, sulfonated-olefins, acrylic acids and their esters, acrylamides, fumaric acid and its esters, maleic acid and its esters, maleic anhydride, vinyl acetate, vinylpyridine, vinylpyrollidone, and vinylsilanes, (b) polyesters, polyamides, polyimides, polyethers, polyurethanes, polyamines, polysulfides, polyketones, polycarbonates, polysulfones, and polysiloxanes, and (c) salts of said polymers, copolymers, or terpolymers (a) and (b) that contain acidic or basic groups.

3. A fiber according to claim 2 formed by meltblowing a two-phase polymeric dispersion in which said first phase is a resin that comprises a copolymer of an olefin with an olefinic acid or its derivatives and said second phase contains from about 1% by volume through about 99% by volume of an incompatible polyolefin resin.

4. A fiber according to claim 3 that comprises a continuous phase of a resin consisting essentially of a copolymer of an olefin with an olefinic acid or its derivatives in which has been dispersed from about 10% by volume through about 90% by volume of an incompatible polyolefin resin.

5. A fiber according to claim 4 comprising polypropylene microfibrils encapsulated in an ethylene/acrylic acid copolymer or its salts or both.

6. A nonwoven fabric comprising a web of fibers according to claim 1.

7. A microfibril produced by extracting the continuous phase resin from the fiber of claim 1.

8. A bundle of microfibrils or a web composed of micrcfibrils according to claim 7.

9. A polypropylene microfibril produced by extracting the ethylene/acrylic acid copolymer or its salts from the fiber of claim 5.

10. An ion exchange or absorptive medium comprising a nonwoven fabric according to claim 6.

11. A medium for the absorption of solids or liquids comprising a nonwoven fabric according to claim 6.

12. An adhesive composition comprising a nonwoven fabric according to claim 6.

13. A filter comprising a nonwoven fabric according to claim 6.

14. A filter as in claim 13 which has been treated to form an electret.

15. A filter as in claim 13 configured as a face mask.

16. A filter as in claim 15 which has been treated to form an electret.

17. A nonoriented fiber that comprises discontinuous microfibrils of at least one polymer, copolymer, or terpolymer or metal randomly distributed within a continuous phase of a second and different polymer, copolymer, or terpolymer.

18. A fiber according to olaim 17 wherein said polymers, copolymers, or terpolymers are selected from the group consisting of (a) polymers, copolymers, or terpolymers formed from olefins, halogenated-olefins, sulfonated-olefins, acrylic acids and their esters, acrylamides, fumaric acid and its esters, maleic acid and its esters, maleic anhydride, vinyl acetate, vinylpyridine, vinylpyrollidone, and vinylsilanes, (b) polyesters, polyamides, polyimides, polyethers, polyurethanes, polyamines, polysulfides, polyketones, polycarbonates, polysulfones, and polysiloxanes, and (c) salts of said polymers, copolymers, or terpolymers that contain acidic or basic groups.

19. A fiber according to claim 18 wherein phase comprises a copolymer of an olefin with acrylic acid, methacrylic acid, maleic acid, fumaric acid, itaconic acid, styrenesulfonic acid, 2-acrylamide-2-propanesulfonic acid, 2-sulfoethylmethacrylate, or an anhydride, an ester, an amide, or a salt thereof and at least one other phase comprises a polyolefin.

20. A fiber according to claim 18 wherein one phase comprises a polyester or a copolymer thereof and at least one other phase comprises a polyolefin.

21. A fiber according to claim 18 wherein one phase comprises a polyamide or a copolymer thereof and at least one other phase comprises a polyolefin.

22. A fiber according to claim 18 wherein one phase comprises a thermotropic (that is, liquid crystal) polymer, copolymer, or terpolymer.

23. A fiber according to claim 17 wherein the dispersed phase comprises a metal or a metal alloy.

24. A nonwoven fabric comprising a web of fibers according to claim 17.

25. A microfibril produced by extracting the continuous phase resin from the fiber of claim 17.

26. A bundle of microfibrils or a web composed of microfibrils according to claim 25.

27. An ion exchange or absorptive medium comprising a nonwoven fabric according to claim 24.

28. A medium for the absorption of solids or liquids comprising a nonwoven fabric according to claim 27.

29. An adhesive composition comprising a nonwoven fabric according to claim 24.

30. A filter comprising a nonwoven fabric according to claim 24.

31. A filter as in claim 30 which has been treated to form an electret.

32. A filter as in claim 30 configured as a face mask.
33. A filter as in claim 22 which has been treated to form an electret.